# EUROPÄISCHE PATENTANMELDUNG

(11) **EP 1 647 636 A2**
(43) Veröffentlichungstag der Anmeldung: **19.04.2006**
(21) Anmeldenummer: 05022571.3
(22) Anmeldetag: 17.10.2005
(51) Int. Cl.: E03C 1/02

(54) **Brauseschlauch**

(30) Priorität: 18.10.2004 DE 202004016125 U
(71) Anmelder: Steglich, Udo, 55129 Mainz (DE); Schücke, Manfred, 01445 Radebeul (DE)
(72) Erfinder: Steglich, Udo, 55129 Mainz (DE); Schücke, Manfred, 01445 Radebeul (DE)
(74) Vertreter: Creutz, Dieter

(57) **Zusammenfassung**

Die Erfindung betrifft einen Brauseschlauch (1) mit einem über ein Anschlussstück (4) verbundenen Brausekopf (5) und / oder einer Mischbatterie.

Efindungsgemäß wird eine gleichförmig gewickelte Feder (2), deren Innendurchmesser eng an dem Außendurchmesser des Brauseschlauches (1) angepasst ist, in dem Anschlussstück (4) eingebracht und über einen Nocken (3) kraftschlüssig mit dem Anschlussstück (4) verbunden.

## Beschreibung

Die Erfindung betrifft einen Brauseschlauch mit einem über ein Anschlussstück verbundenen Brausekopf und / oder einer Mischbatterie.

Beim Duschen in Duschkabinen und ähnlichen Einrichtungen ist immer wieder zu beobachten, dass Brauseschläuche unmittelbar hinter dem Brausekopf und vor dem Anschluss an die Mischbatterie abgeknickt sind und der Brauseschlauch dadurch häufig zerstört wird.

Trotz Verstärkung der Schlauchwandung durch spiralförmig gewundenes Metallband ist der Schlauch nicht ausreichend knickfest. Dies ist sehr oft dadurch bedingt, dass das durchfließende erhitzte Wasser einen Festigkeitsverlust des Schlauches herbeiführt. Ebenso ist eine mechanische Beanspruchung des Schlauches durch Zug und Abknicken bei häufiger Nutzung der Brauseschläuche eine weitere Ursache für Defekte insbesondere an den Übergangsstellen zum Brausekopf und zur Mischbatterie.

Dieser Problematik haben sich mehre Entwicklungen gewidmet. Dabei sind flexible in der Wandung eingebettete Verstärkungen zur Anwendung gekommen.

Eine Lösung, die eine besondere Verstärkung im gefährdeten Bereich des Schlauches vorsieht, wird in der DE 295 18 064 U1 beschrieben. Hierbei wird in ein mit dem Endstück versehenen Schlauchende ein Einsatzrohr angeordnet, welches im Schlauchinneren einen Längenbereich überdeckt, der größer ist als die Längenausdehnung des Endstückes. Das Einsatzrohr ist dabei mit der äußeren und inneren Mantelfläche als auch der Dichtungsfläche des Endstückes verbunden. Nachteil einer solchen Lösung ist deren aufwendige Herstellung im Bereich der Enden des Brauseschlauches.

Aufgabe der Erfindung ist es daher eine in der Herstellung einfachere Lösung bei gleichzeitig hoher Flexibilität und Stabilität, d.h. höherer Knickbeanspruchung an den Anschlussstellen zum Brauskopf und zur Mischbatterie zu erhalten.

Die Aufgabe wird erfindungsgemäß gelöst, indem eine gleichförmig gewickelte Feder, deren Innendurchmesser eng an dem Außendurchmesser eines Brauseschlauches angepasst ist, in ein Anschlussstück eingebracht wird.

Dadurch wird der Brauseschlauch in dem gefährdeten Bereich kraftschlüssig so unterstützt, dass der Biegemoment des Knickes reduziert wird, so dass ein Abnicken des Brauseschlauches nicht mehr möglich ist.

Die Feder wird dabei über einen Nocken kraftschlüssig mit dem Anschlussstück verbunden.

Ein solcher Nocken kann zudem über einen beliebigen Abschnitt oder über den Gesamtumfang des Innendurchmessers des Anschlussstückes ausgebildet sein.

Als ebenso vorteilhaft erweist es sich, wenn der Nocken im gesamten Längenbereich des Anschlussstückes wendelförmig ausgeformt wird.

In einer bevorzugten Ausführungsvariante überdeckt die Feder einen Längenbereich, der die Längenausdehnung des Anschlussstückes erheblich übersteigt.

Eine solche Längenausdehnung kann dabei in einer weiteren vorteilhaften Ausführungsart die Länge des Anschlussstückes um das Dreifache übersteigen.

Mit der so angepassten Feder am erfindungsgemäßen Brauseschlauch wird den ästhetischen Anforderungen an die Gestaltung von Duscheinrichtungen Rechnung getragen. Insbesondere ist die Feder technisch elegant in die Anschlussstücken eingepasst und wird kraftschlüssig gehalten.

Eine besonders vorteilhafte Lösung ergibt sich, wenn der Drahtdurchmesser der Feder so gestaltet ist, dass dieser in der Längsausdehnung der Feder konisch ausgebildet wird. Diese Lösung bietet gegenüber anderen Vorschlägen einen besonders elegante Ausgestaltung des Brauseschlauches und wertet diesen optisch noch auf.

Insbesondere erhält der Brauseschlauch bei der Handhabung, auf Grund des Widerstandsmomentes der Feder, in den gefährdeten Knickbereich zudem einen eleganten Radius.

Die Erfindung wird an Hand eines Beispieles näher erläutert.

Darin bedeuten :
(1) Brauseschlauch
(2) Feder
(3) Nocken
(4) Anschlussstück
(5) Brausekopf oder Mischbatterie

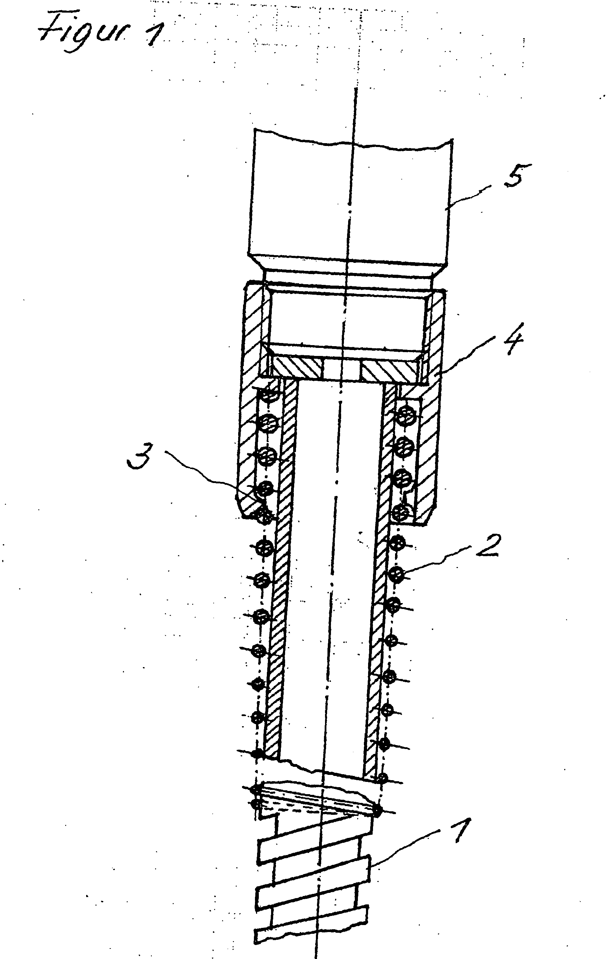

**Figur 1:** zeigt die Lösung der Entlastung des Knickmomentes am Brauseschlauch (1) im Bereich des Anschlussstückes (4). Äquivalent wird die Entlastung des Knickmomentes im Bereich des Anschlussstückes (4) des Brauseschlauches (1) an die Mischbatterie ausgeführt.

In dem Anschlussstück (4) wird ein Nocken (3) in einem beliebigen Abschnitt oder am Gesamtumfang so angebracht, dass eine gleichförmig gewickelte Feder (2), die in ihrer Längenausdehnung einen konisch ausgebildeten oder einen gleichförmigen Drahtdurchmesser aufweist, über den Nocken (3) in das Anschlussstück (4) kraftschlüssig " eingeschraubt". Die Feder (2) ist so ausgebildet, dass ihr Innendurchmesser eng an den Außendurchmesser des Brauseschlauches (4) angepasst ist. Die Feder (2) besitzt einen Längenbereich, der die Längenausdehnung der Brausekopfhalterung erheblich übersteigt.

## Patentansprüche

1. Brauseschlauch (1) mit einem über ein Anschlussstück(4) verbundenen Brausekopf (5) und /oder einer Mischbatterie, **dadurch gekennzeichnet, dass** eine gleichförmig gewickelte Feder (2), deren Innendurchmesser eng an dem Außendurchmesser des Brauseschlauches (1) angepasst ist, in dem Anschlussstück (4) eingebracht und über einen Nocken (3) kraftschlüssig mit dem Anschlussstück (4) verbunden ist.

2. Brauseschlauch (1) nach Anspruch 1, **dadurch gekennzeichnet, dass** die Feder (2) in ihrer Längsausdehnung einen konisch ausgebildeten Drahtdurchmesser aufweist.

3. Brauseschlauch (1) nach Anspruch 1, **dadurch gekennzeichnet, dass** die Feder (2) einen Längenbereich überdeckt, der die Längenausdehnung des Anschlussstückes (4) erheblich übersteigt.

4. Brauseschlauch (1) nach Anspruch 3, **dadurch gekennzeichnet, dass** die Feder (2) einen Längenbereich überdeckt, der die Längenausdehnung des Anschlussstückes (4) um das Dreifache übersteigt.

5. Brauseschlauch (1) nach Anspruch 1, **dadurch gekennzeichnet, dass** der Nocken (3) über einen beliebigen Abschnitt oder den Gesamtumfang des Innendurchmessers der Anschlussstückes (4) ausgebildet ist.

6. Brauseschlauch (1) nach Anspruch 1, **dadurch gekennzeichnet, dass** der Nocken (3) im gesamten Längenbereich des Anschlussstückes (4) wendelförmig ausgeformt ist.
